# EUROPÄISCHE PATENTSCHRIFT

(11) **EP 3 538 781 B1**
(45) Veröffentlichungstag und Bekanntmachung des Hinweises auf die Patenterteilung: **18.08.2021**
(21) Anmeldenummer: 17780752.6
(22) Anmeldetag: 09.10.2017
(51) Int. Cl.: F16C 33/78, F16C 33/58, B60B 27/00, G01P 3/44

(54) **RADLAGERANORDNUNG FÜR EIN KRAFTFAHRZEUG**
WHEEL BEARING ARRANGEMENT FOR A MOTOR VEHICLE
ENSEMBLE DE PALIER DE ROUE POUR VÉHICULE À MOTEUR

(30) Priorität: 10.11.2016 DE 102016222110
(43) Veröffentlichungstag der Anmeldung: 18.09.2019
(73) Patentinhaber: Audi AG, 85045 Ingolstadt (DE)
(72) Erfinder: ALBL, Johannes, 85055 Ingolstadt (DE); FRISCH, Michael, 94513 Schönberg (DE)
(86) Internationale Anmeldenummer: PCT/EP2017/075635
(87) Internationale Veröffentlichungsnummer: WO 2018/086808

(56) Entgegenhaltungen:
- JP-A- 2002 327 769
- JP-A- 2014 142 054
- US-A1- 2013 069 332

## Beschreibung

Die Erfindung betrifft eine Radlageranordnung für ein Kraftfahrzeug, mit einem Radträger und einer mittels eines Radlagers an dem Radträger drehbar gelagerten Radnabe zur Befestigung eines Rads, mit der eine Welle drehfest gekoppelt ist, wobei eine Radlagerdichtung einerseits an einem auf der Radnabe aufsitzenden Innenring des Radlagers und andererseits auf einem an dem Radträger befestigten Außenring des Radlagers dichtend anliegt, wobei die Radlagerdichtung zwischen dem Innenring und dem Außenring aufgenommen ist.

Die Radlageranordnung dient der drehbaren Lagerung wenigstens eines Rads an einer Karosserie des Kraftfahrzeugs. Die Radlageranordnung ist dabei bevorzugt Bestandteil einer Radaufhängung, welche der Aufhängung, insbesondere der federnden Aufhängung, des Rads bezüglich der Karosserie dient. Das Rad ist an dem Radträger der Radlageranordnung drehbar gelagert. Hierzu ist das Rad an der Radnabe befestigbar, welche schlussendlich mittels des Radlagers an dem Radträger drehbar gelagert ist. Der Radträger weist beispielsweise eine Radlageraufnahme auf, welche als Öffnung, insbesondere als randgeschlossene Öffnung, in dem Radträger ausgestaltet sein kann.

In der Radlageraufnahme ist das Radlager angeordnet. Zudem greift die Radnabe und/oder die mit ihr drehfest gekoppelte Welle wenigstens bereichsweise in die Radlageraufnahme ein. Besonders bevorzugt durchgreifen die Radnabe und/oder die Welle, insbesondere gemeinsam, die Radlageraufnahme in axialer Richtung bezüglich einer Drehachse der Radnabe zumindest teilweise, insbesondere vollständig.

Das Radlager verfügt über den Innenring und den Außenring. Es liegt bevorzugt als Wälzlager vor, sodass zwischen dem Innenring und dem Außenring zur Reibungsreduzierung Wälzkörper vorliegen. Der Innenring ist mit der Radnabe verbunden, beispielsweise ist er einstückig mit ihr ausgestaltet oder an ihr befestigt, während der Außenring an dem Radträger befestigt ist. Dabei liegt der Außenring bevorzugt in der Radlageraufnahme vor. Anders ausgedrückt liegt der Außenring mit seiner Außenumfangsfläche an einer Innenumfangsfläche der Radlageraufnahme an.

Die vorstehend bereits erwähnte Welle ist drehfest mit der Radnabe gekoppelt. Dies kann grundsätzlich auf beliebige Art und Weise vorgesehen sein. Beispielsweise ist die Welle kraftschlüssig und/oder formschlüssig und/oder stoffschlüssig mit der Radnabe verbunden. Es kann vorgesehen sein, dass die Radnabe und die Welle einstückig ausgestaltet sind, sodass sie als ein einziges gemeinsames Bauteil vorliegen, welches beispielsweise als Radnabenanordnung bezeichnet werden kann. Sind die Radnabe und die Welle einstückig miteinander ausgestaltet, so liegen sie bevorzugt materialeinheitlich vor, bestehen also aus demselben Material. Selbstverständlich ist auch eine mehrstückige Ausgestaltung möglich. Bei einer solchen werden die Radnabe und die Welle separat voneinander ausgebildet und nachfolgend miteinander verbunden.

Der Radträger ist bevorzugt über wenigstens einen Fahrwerklenker mit der Karosserie verbunden. Der Fahrwerklenker greift also einerseits an der Karosserie und andererseits an dem Radträger an, insbesondere jeweils schwenkbeweglich. Der Fahrwerklenker liegt beispielsweise in Form eines Querlenkers vor. Auch eine Ausgestaltung als Längslenker ist jedoch möglich. Grundsätzlich erfolgt die Anbindung des Radträgers über den wenigstens einen Fahrwerklenker. Bevorzugt sind jedoch mehrere Fahrwerklenker zur Anbindung des Radträgers an die Karosserie vorgesehen. Insbesondere liegt der Fahrwerklenker in Form eines Zweipunktlenkers vor.

Um das Eindringen von Feuchtigkeit und/oder Schmutz in das Radlager zu verhindern, ist die Radlagerdichtung vorgesehen. Diese dichtet den Innenring und den Außenring gegeneinander ab, liegt also sowohl an dem Innenring als auch an dem Außenring dichtend an. Beispielsweise ist die Radlagerdichtung dabei drehfest mit einem der Ringe, also entweder dem Innenring oder dem Außenring, verbunden, während sie an dem jeweils anderen Ring, also dem Außenring oder dem Innenring, drehbar anliegt. Bei einer Drehbewegung des Radträgers bezüglich der Radnabe und einer entsprechenden Drehbewegung des Innenrings bezüglich des Außenrings liegt also auch eine Drehbewegung der Radlagerdichtung bezüglich eines der Ringe vor. Besonders bevorzugt ist die Radlagerdichtung zwischen dem Innenring und dem Außenring aufgenommen, sodass sie also in axialer Richtung bezüglich der Drehachse der Radnabe gesehen in Überdeckung mit dem Radlager vorliegt. Insbesondere steht sie in axialer Richtung nicht über das Radlager über.

Aus dem Stand der Technik ist die Druckschrift JP 2002 327769 A bekannt. Diese beschreibt eine Lagervorrichtung für ein Antriebsrad, an der ein Drehzahlmesser befestigt ist, dessen axiale Ausmessungen so kurz wie möglich ausgebildet sind. Der Drehzahlmesser ist in Form eines magnetischen Gebers ausgebildet, der durch eine Vulkanisierung an einem Ölschleuderring befestigt ist. Der Ölschleuderring ist an einem sich drehenden inneren Element oder einer Schulter eines Außenrings einer universellen Wellenaufnahme befestigt. JP 2002 327769 A offenbart eine Radlageranordnung gemäß dem Oberbegriff des Anspruchs 1.

Aus der Druckschrift US 2013/069332 A1 ist eine Radlagerbaugruppe bekannt. Diese umfasst eine Radnabe, ein Achsschenkelelement, das eine Bohrung ausbildet, ein Lager, das in der Bohrung angeordnet und ausgelegt ist, um die Radnabe drehbar zu lagern, und das ein Dichtungselement aufweist, das ausgelegt ist, um das Innenleben des Lagers abzudecken, eine ringförmige Schleuderscheibe, die an dem Radlager angeordnet und ausgelegt ist, um das Dichtungselement zumindest teilweise abzuschirmen, um ein Aufnehmen von Schmutzstoffen aus der Umgebung durch das Lager zu minimieren, eine ringförmige Abschirmung, die ausgelegt ist, um die Schleuderscheibe zumindest teilweise vor den Schmutzstoffen abzuschirmen und einen Labyrinthpfad für etwaige der Schmutzstoffe aus der Umgebung zu dem Dichtungselement zu erzeugen, und einen Ablaufkanal, der von der Abschirmung ausgebildet und ausgelegt ist, um ein Ausstoßen der Schmutzstoffe, die in die Abschirmung eindringen, an die Umgebung zuzulassen, wobei die Abschirmung zwischen dem Lager und dem Achsschenkelelement festgehalten ist, wobei die Radnabe eine Rollprofilierung umfasst, die ausgelegt ist, um das Lager an der Radnabe festzuhalten, wobei die Schleuderscheibe auf die Rollprofilierung gedrückt ist, und wobei der Labyrinthpfad durch die Abschirmung und die Schleuderscheibe gebildet ist.

Aus dem Stand der Technik ist weiterhin die Druckschrift DE 699 08 493 T2 bekannt. Diese beschreibt eine Radlagervorrichtung, umfassend: einen äußeren Ring, befestigt an einer Wagenkastenseite, einen inneren Ring, der auf dem äußeren Ring über Wälzkörper drehbar gelagert ist und der so an einer Seite einer Antriebswelle befestigt ist, dass sie sich zusammen mit dieser dreht, einen Impulsgeberring, und eine Dichtung mit einem Metallring und einem ringförmigen elastischen Teil, wobei ein proximales Ende des Metallrings fest an einer Endflächenseite des äußeren Rings, die der einen Endflächenseite des inneren Rings entspricht, befestigt ist, und wobei das ringförmige elastische Teil an einem distalen Ende des Metallrings befestigt ist, wobei der Impulsgeberring von der Dichtung umschlossen wird und wobei ein Aufnehmersensor auf dem Metallring so gelagert ist, dass er sich dem Impulsgeberring gegenüber befindet. Dabei ist vorgesehen, dass der Impulsgeberring fest an der einen Endflächenseite des inneren Rings befestigt ist und dass der elastische Teil in einen engen und verschiebbaren Kontakt mit einer Außenumfangsfläche der Antriebswelle gebracht wird.

Weiterhin beschreibt die Druckschrift DE 201 02 451 U1 eine Radlagereinheit für ein Kraftfahrzeug mit einem in einem Schwenklager angeordneten Radlager und einer aufgenommenen Gelenkwelle, die mit einer Gelenkglocke einem Aufnahmeelement des Schwenklagers gegenübersteht. Dabei ist vorgesehen, dass die unmittelbar gegenüberstehenden Bereiche des Aufnahmeelements und der Gelenkglocke eine Dickenverminderung aufweisen und ein sich bildender Ringspalt zwischen dem Aufnahmeelement und der Gelenkglocke von einem auf die Gelenkwelle aufpressbaren Abdichtring überbrückbar ist.

Schließlich beschreibt die Druckschrift DE 25 05 081 A1 eine Anordnung zur Lagerung eines Fahrzeugrads insbesondere eines Kraftfahrzeugs mit einem eine Lagerbohrung aufweisenden äußeren Lagerteil und einem mittels eines Wälzlagers in der Lagerbohrung gelagerten, den Achszapfen enthaltenen inneren Lagerteil, wobei das eine Lagerteil mit dem Fahrzeugrad und das andere Lagerteil mit am Fahrzeugaufbau angelenkten Radführungsgliedern in Verbindung steht und wobei in dem neben dem Wälzlager zwischen dem inneren und dem äußeren Lagerteil befindlichen Lagerspalt eine Dichtungsvorrichtung vorgesehen ist, welche mit einer am äußeren Lagerteil angeordneten umlaufenden Nut zusammenwirkt, die an der Stirnseite des äußeren Lagerteils beginnend in die Lagerbohrung hineinführt. Dabei ist vorgesehen, dass die umlaufende Nut eine Hinterschneidung aufweist und dass ein kegelstumpfähnlicher Schleuderring, dessen sich verjüngender Teil auf dem inneren Lagerteil befestigt ist, mit einem sich erweiternden Teil in die hinterschnittene Nut hineinragt.

Es ist Aufgabe der Erfindung, eine Radlageranordnung für ein Kraftfahrzeug vorzuschlagen, welche gegenüber bekannten Radlageranordnungen Vorteile aufweist, insbesondere eine zuverlässigere Abdichtung des Radlagers gegenüber der Außenumgebung ermöglicht. Insbesondere soll der Eintrag von Feuchtigkeit und/oder Schmutz bereits in Richtung der Radlagerdichtung unterbunden werden, sodass diese lediglich eine Art Nachdichtung darstellt.

Dies wird erfindungsgemäß mit einer Radlageranordnung mit den Merkmalen des Anspruchs 1 erreicht. Dabei ist vorgesehen, dass die Radlageranordnung zusätzlich zu der Radlagerdichtung eine von der Radlagerdichtung beabstandete Radlagervordichtung aufweist, die benachbart zu dem Radlager drehfest an der Welle befestigt ist und mit einem Dichtungsvorsprung in eine zumindest bereichsweise zwischen dem Außenring und dem Radträger ausgebildete Vordichtungsaufnahme eingreift.

Zusätzlich zu der Radlagerdichtung dient insoweit die Radlagervordichtung zur Verbesserung der Dichtwirkung. Die Radlagervordichtung dient hierbei gemäß ihrer Bezeichnung als Vordichtung, während die Radlagerdichtung als Nachdichtung fungiert. Das bedeutet, dass die Radlagervordichtung und die Radlagerdichtung in einem Strömungsweg zwischen der Außenumgebung einerseits und dem Radlager andererseits in serieller Anordnung vorliegen, wobei die Radlagervordichtung auf der der Außenumgebung zugewandten Seite beziehungsweise der dem Radlager abgewandten Seite der Radlagerdichtung vorliegt. Die Radlagervordichtung liegt beispielsweise in Form eines Blechs, insbesondere eines Metallblechs, oder dergleichen vor.

Die Radlagervordichtung ist benachbart zu dem Radlager angeordnet. Das bedeutet, dass sie in axialer Richtung bezüglich der Drehachse der Radnabe gesehen neben, insbesondere unmittelbar neben, dem Radlager und/oder der Radlagerdichtung angeordnet ist. Im Querschnitt gesehen liegt die Radlagervordichtung dabei zumindest teilweise in Überdeckung mit dem Radlager vor. Die Überdeckung im Querschnitt beziehungsweise in axialer Richtung gesehen zwischen der Radlagervordichtung und dem Radlager wird insbesondere mittels des Dichtungsvorsprungs erzielt. Der Dichtungsvorsprung der Radlagervordichtung greift hierzu in die Vordichtungsaufnahme ein, die zumindest bereichsweise zwischen dem Außenring und dem Radträger ausgebildet ist.

Die Vordichtungsaufnahme ist beispielsweise durch eine in dem Außenring und/oder dem Radträger ausgebildete Ausnehmung gebildet. Bevorzugt greift der Dichtungsvorsprung berührungslos in die Vordichtungsaufnahme ein, liegt also in radialer Richtung gesehen beabstandet von dem Außenring, dem Radträger oder sowohl dem Außenring als auch dem Radträger vor. Bevorzugt wird die Vordichtungsaufnahme in radialer Richtung gesehen einerseits von dem Außenring und andererseits von dem Radträger begrenzt. Beispielsweise weist hierzu der Radträger eine entsprechende, zunächst randoffene Ausnehmung auf, die in die Radlageraufnahme einmündet. Anschließend wird das Radlager derart in der Radlageraufnahme angeordnet, dass es mit seinem Au-ßenring, insbesondere der Außenumfangsfläche des Außenrings, die Vordichtungsaufnahme in radialer Richtung begrenzt.

Die Vordichtungsaufnahme liegt vorzugsweise als in Umfangsrichtung zumindest teilweise umlaufende Nut vor, sodass sie auch als Vordichtungsaufnahmenut bezeichnet werden kann. Die Vordichtungsaufnahme weist beispielsweise einen im Wesentlichen rechteckigen Querschnitt auf, wird also in axialer Richtung von einem Boden begrenzt, auf welchem zwei in radialer Richtung voneinander beabstandete Seitenwände im Längsschnitt bezüglich der Drehachse gesehen senkrecht stehen. Der Boden und eine der Seitenwände werden nun bevorzugt von dem Radträger ausgebildet, während eine andere der Seitenwände von dem Außenring des Radlagers gebildet ist. Durch das Eingreifen des Dichtungsvorsprungs in die Vordichtungsaufnahme ist eine Labyrinthdichtung realisiert.

Die Radlagervordichtung ist drehfest an der Welle befestigt und mithin drehfest mit der Radnabe gekoppelt. Hierbei wird insbesondere auf die vorstehenden Ausführungen hingewiesen, gemäß welchen die Radnabe und die Welle einstückig und/oder materialeinheitlich ausgestaltet sein können. Bei einer Drehbewegung der Radnabe bezüglich des Radträgers läuft die Radlagervordichtung gemeinsam mit der Radnabe um. Entsprechend liegt auch eine Drehbewegung des Dichtungsvorsprungs in der Vordichtungsaufnahme vor. Im Längsschnitt gesehen übergreift die Radlagervordichtung in radialer Richtung einen zwischen dem Außenring und dem Innenring des Radlagers vorliegenden Lagerspalt vollständig. Insbesondere erstreckt sich die Radlagervordichtung in radialer Richtung ausgehend von der Welle bis hin zu der Vordichtungsaufnahme, wobei die Vordichtungsaufnahme in radialer Richtung gesehen weiter außen liegt als die Welle beziehungsweise eine Anbindungsstelle der Radlagervordichtung an die Welle.

Im Rahmen einer weiteren Ausgestaltung der Erfindung ist vorgesehen, dass die Radlagervordichtung im Längsschnitt bezüglich einer Drehachse der Radnabe gesehen einen an der Welle angreifenden ersten Schenkel und einen den Dichtungsvorsprung ausbildenden sowie bezüglich des ersten Schenkels angewinkelten zweiten Schenkel aufweist. Die Radlagervordichtung besteht also zumindest aus dem ersten Schenkel und dem zweiten Schenkel. Diese beiden Schenkel sind gegeneinander angewinkelt, schließen also miteinander einen Winkel von größer als 0° und kleiner als 180° ein. Besonders bevorzugt stehen die beiden Schenkel senkrecht aufeinander, schließen also einen Winkel von 90° miteinander ein.

Im Längsschnitt gesehen verläuft jeder der Schenkel jeweils vorzugsweise gerade. Der erste Schenkel steht beispielsweise senkrecht auf der Drehachse der Radnabe, zumindest näherungsweise. Der zweite Schenkel, welche den Dichtungsvorsprung ausbildet, ist hingegen bevorzugt parallel zu der Drehachse angeordnet. Die Radlagervordichtung kann zusätzlich zu dem ersten Schenkel und dem zweiten Schenkel einen dritten Schenkel aufweisen. Dieser dient insbesondere der Befestigung der Radlagervordichtung an der Welle. Bevorzugt liegt der dritte Schenkel auf der dem zweiten Schenkel bezüglich des ersten Schenkels gegenüberliegenden Seite des ersten Schenkels vor. Der zweite Schenkel sowie der dritte Schenkel gehen insoweit von dem ersten Schenkel aus. Der dritte Schenkel ist wiederum bezüglich des ersten Schenkels angewinkelt, beispielsweise steht er senkrecht auf ihm. Insoweit liegt der dritte Schenkel beispielsweise parallel zu der Drehachse vor.

Es ist bevorzugt vorgesehen, dass der dritte Schenkel eben an der Welle beziehungsweise an einem Außenumfang der Welle anliegt, insbesondere in Umfangsrichtung durchgehend. Auf diese Art und Weise wird eine zuverlässige Befestigung der Radlagervordichtung an der Welle erzielt. In axialer Richtung gesehen erstreckt sich der dritte Schenkel vorzugsweise ausgehend von dem ersten Schenkel in eine andere Richtung als der zweite Schenkel. Ausgehend von dem ersten Schenkel weisen der zweite Schenkel und der dritte Schenkel also in axialer Richtung in entgegengesetzte Richtungen.

Im Rahmen einer bevorzugten Ausführungsform der Erfindung ist vorgesehen, dass die Radlagervordichtung in Umfangsrichtung bezüglich der Drehachse der Radnabe die Welle durchgehend umgreift. Mit einer derartigen Ausgestaltung der Radlagervordichtung wird eine besonders hervorragende Dichtwirkung erzielt. Zudem wird eine Unwucht von bewegten Teilen vermieden, sodass der Rundlauf der Radnabe nicht beeinträchtigt wird.

Eine Weiterbildung der Erfindung sieht vor, dass die Vordichtungsaufnahme zur Ausbildung eines Abtropfkanals in einem bestimmten Winkelbereich unterbrochen ist. Die Vordichtungsaufnahme ist insoweit in Umfangsrichtung nicht durchgehend ausgebildet, sondern vielmehr in dem bestimmten Winkelbereich unterbrochen. In dem bestimmten Winkelbereich greift insoweit der Dichtungsvorsprung nicht in die Vordichtungsaufnahme ein. Die Unterbrechung der Vordichtungsaufnahme dient der Ausbildung des Abtropfkanals, sodass in der Vordichtungsaufnahme anfallende Feuchtigkeit durch den Abtropfkanal abgeführt werden kann, bevorzugt durch Schwerkrafteinfluss.

Der bestimmte Winkelbereich ist beispielsweise derart gewählt, dass die Vordichtungsaufnahme zur Ausbildung des Abtropfkanals in Einbaulage der Radlageranordnung an einer geodätisch am tiefsten liegenden Stelle unterbrochen ist. Der Abtropfkanal durchgreift bevorzugt den Radträger zumindest teilweise, insbesondere ausgehend von einer Innenumfangsfläche der Radlageraufnahme beziehungsweise der Außenumfangsfläche des Außenrings in radialer Richtung bis zu einer Außenseite des Radträgers. Der Abtropfkanal durchgreift insoweit eine Wand des Radträgers in radialer Richtung vorzugsweise vollständig, wobei die Wand in radialer Richtung innen die Radlageraufnahme begrenzt.

Eine bevorzugte weitere Ausführungsform der Erfindung sieht vor, dass der Außenring zumindest in dem Winkelbereich asymmetrisch ausgestaltet ist, insbesondere eine Abtropffase aufweist. Die asymmetrische Ausgestaltung, beispielsweise in Form der Abtropffase, ist dabei in radialer Richtung außen an dem Außenring ausgebildet, nämlich auf seiner der Radlagervordichtung zugewandten Seite. Die asymmetrische Ausgestaltung beziehungsweise Abtropffase kann selbstverständlich in Umfangsrichtung durchgehend ausgestaltet sein. Besonders bevorzugt liegt sie jedoch lediglich in dem Winkelbereich vor. Bevorzugt läuft die asymmetrische Ausgestaltung beziehungsweise die Abtropffase in Umfangsrichtung gesehen beidseitig stetig aus, weist also keine abrupten Enden auf.

Im Rahmen einer weiteren Ausgestaltung der Erfindung kann vorgesehen sein, dass an der Radlagervordichtung ein in Umfangsrichtung durchgehender Drehwinkelgeberring mit wenigstens einem Drehwinkelgeberelement befestigt ist, insbesondere auf der dem Radlager abgewandten Seite der Radlagervordichtung. Der Drehwinkelgeberring ist Bestandteil eines Drehwinkelgebers, welcher der Ermittlung einer Drehwinkelstellung der Radnabe bezüglich des Radträgers dient, beispielsweise einer absoluten oder einer relativen Drehwinkelstellung.

Der Drehwinkelgeberring ist in Umfangsrichtung durchgehend ausgestaltet und weist das wenigstens eine Drehwinkelgeberelement auf. Bevorzugt besteht der Drehwinkelgeberring aus einem steiferen Material als die Radlagervordichtung beziehungsweise ist steifer ausgestaltet als diese. Beispielsweise verfügt hierzu der Drehwinkelgeberring über eine größere Materialstärke in axialer Richtung als die Radlagervordichtung. Der Drehwinkelgeberring ist an der Radlagervordichtung befestigt, insbesondere an dem ersten Schenkel. Hierbei kann der Drehwinkelgeberring einer Versteifung der Radlagervordichtung beziehungsweise des ersten Schenkels der Radlagervordichtung dienen. Die Anordnung des Drehwinkelgeberrings ist bevorzugt auf der dem Radlager abgewandten Seite der Radlagervordichtung vorgesehen. Selbstverständlich ist auch eine Anordnung auf der dem Radlager zugewandten Seite möglich.

Eine weitere Ausführungsform der Erfindung sieht vor, dass benachbart zu dem Drehwinkelgeberring eine Sensoreinrichtung zur Erfassung des Drehwinkelgeberelements angeordnet ist. Die Sensoreinrichtung ist zusätzlich zu dem Drehwinkelgeberring Bestandteil des Drehwinkelgebers. Mithilfe der Sensoreinrichtung kann die Drehwinkelstellung der Radnabe bezüglich des Radträgers erfasst werden, insbesondere inkrementell. Im Längsschnitt beziehungsweise in axialer Richtung gesehen liegt die Sensoreinrichtung benachbart zu dem Drehwinkelgeberring vor. In axialer Richtung beträgt der Abstand zwischen der Sensoreinrichtung und dem Drehwinkelgeberring bezogen auf die Erstreckung des Drehwinkelgeberrings in axialer Richtung vorzugsweise höchstens 25 %, höchstens 50 %, höchstens 75 %, höchstens 100 %, höchstens 125 % oder höchstens 150 %. Sowohl der Drehwinkelgeberring als auch die Sensoreinrichtung weisen jeweils eine Planfläche auf, wobei die Planfläche des Drehwinkelgeberrings parallel zu der Planfläche der Sensoreinrichtung angeordnet ist und im Längsschnitt gesehen in Überdeckung mit ihr vorliegt.

Eine weitere Ausführungsform der Erfindung sieht vor, dass die Sensoreinrichtung ringförmig ist und zusammen mit dem Drehwinkelgeberring eine Labyrinthdichtung ausbildet. Es kann insoweit vorgesehen sein, dass die Sensoreinrichtung die Welle in Umfangsrichtung vollständig umgreift, sodass sie in Umfangsrichtung durchgehend ausgestaltet ist. Sie bildet hierbei zusammen mit dem Drehwinkelgeberring die Labyrinthdichtung aus, wozu insbesondere die beiden vorstehend erläuterten Planflächen dienen.

Eine weitere bevorzugte Ausgestaltung der Erfindung sieht vor, dass an der Radlagervordichtung eine Zusatzdichtung befestigt ist, insbesondere auf der dem Radlager zugewandten Seite der Radlagervordichtung, die mit dem Au-ßenring in Dichtkontakt steht. Die Zusatzdichtung besteht beispielsweise aus einem weicheren Material als die Radlagervordichtung, insbesondere aus einem elastischen und/oder porösen Material. Die Zusatzdichtung dient bevorzugt der zusätzlichen Abdichtung der Radlagervordichtung gegenüber dem Radlager. Hierzu ist die Zusatzdichtung auf der dem Radlager zugewandten Seite der Radlagervordichtung an dieser befestigt. Die Zusatzdichtung steht mit dem Außenring in Dichtkontakt. Hierzu liegt sie beispielsweise dichtend an ihm an.

Schließlich kann im Rahmen einer weiteren bevorzugten Ausgestaltung der Erfindung vorgesehen sein, dass der Dichtkontakt mittels eines an dem Außenring angeordneten, beispielsweise umlaufenden Dichtelements hergestellt ist. Der Dichtkontakt zwischen der Zusatzdichtung und dem Außenring liegt also nicht unmittelbar, sondern lediglich mittelbar über das Dichtelement vor. Das Dichtelement ist an dem Außenring angeordnet und erstreckt sich in axialer Richtung in Richtung der Zusatzdichtung, so dass das Dichtelement in axialer Richtung bezüglich der Drehachse in die Zusatzdichtung eingreift.

Das Dichtelement kann in Umfangsrichtung durchgehend ausgestaltet sein. Besonders bevorzugt ist es jedoch analog zu der Vordichtungsaufnahme in dem bestimmten Winkelbereich unterbrochen oder zumindest in einem Winkelbereich, der mit dem bestimmten Winkelbereich in Überdeckung steht. Mit einer derartigen Ausgestaltung des Dichtelements kann Feuchtigkeit zuverlässig durch den Abtropfkanal abgeführt werden. Das Dichtelement besteht bevorzugt aus einem starreren Material als die Zusatzdichtung, beispielsweise aus Metall. Beispielsweise liegt das Dichtelement in Form eines Metallblechs vor, welches an dem Außenring angeordnet, insbesondere drehfest befestigt ist.

Greift das Dichtelement in die Zusatzdichtung ein, so ist eine Labyrinthdichtung realisiert. Beispielsweise wird bei einer Montage der Radlageranordnung das Dichtelement an die Zusatzdichtung angepresst oder in sie eingepresst. Bei einer darauffolgenden Drehbewegung des Dichtelements bezüglich der Zusatzdichtung, insbesondere also bei einer Drehbewegung der Welle und/oder der Radnabe, schneidet sich das Dichtelement in die Zusatzdichtung ein. Somit entsteht eine Labyrinthdichtung, welche eine minimale Spaltbreite aufweist, jedoch berührungsfrei ist. Dies gewährleistet eine hervorragende Dichtheit bei gleichzeitig geringer Reibung.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Teillängsschnittdarstellung einer Radlageranordnung für ein Kraftfahrzeug in einer zweiten Ausführungsform, sowie
- Figur 2: eine Teillängsschnittdarstellung der Radlageranordnung in einer zweiten Ausführungsform.

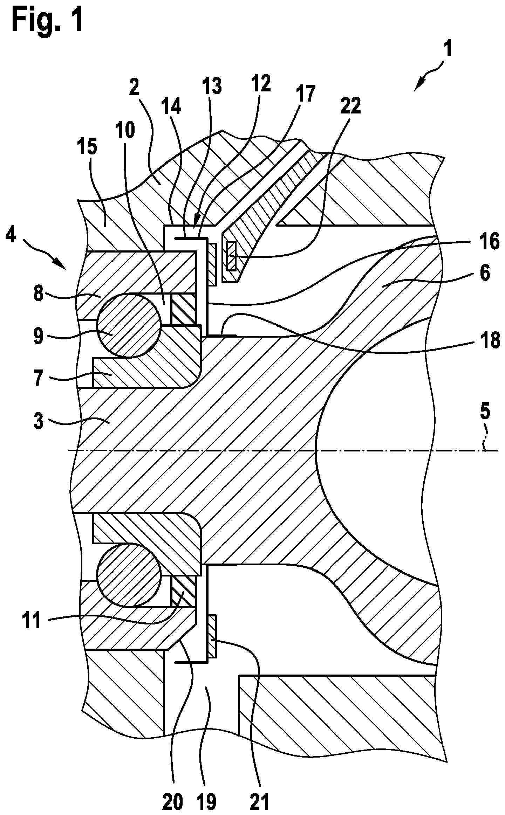

Die Figur 1 zeigt eine schematische Darstellung einer Radlageranordnung 1 eines nicht weiter dargestellten Kraftfahrzeugs. Die Radlageranordnung 1 verfügt über einen Radträger 2, der hier lediglich abschnittsweise dargestellt ist. Der Radträger 2 ist beispielsweise über wenigstens einen Fahrzeuglenker mit einer Karosserie des Kraftfahrzeugs gekoppelt. Der Radträger 2 dient der Lagerung einer Radnabe, welche hier nicht dargestellt ist. Die Radnabe ist mittels eines Radlagers 4 bezüglich des Radträgers 2 um eine Drehachse 5 drehbar gelagert. Zusätzlich zu der Radnabe ist eine Welle 6 vorgesehen, welche ebenfalls um die Drehachse 5 drehbar gelagert ist. In dem hier dargestellten Ausführungsbeispiel liegt die Welle 6 beispielsweise in Form einer Gelenkwelle vor. Die Welle 6 ist bevorzugt mit der Radnabe drehfest gekoppelt, beispielsweise mittels einer Verzahnung. Die Welle 6 kann grundsätzlich jede beliebige Form und Gestalt annehmen.

Das Radlager 4 ist als Wälzlager ausgestaltet. Es verfügt über einen Innenring 7 und einen Außenring 8. Der Innenring 7 ist mit der Radnabe drehfest verbunden, insbesondere ist er einstückig und/oder materialeinheitlich mit ihr ausgestaltet. Zwischen dem Innenring 7 und dem Außenring 8 sind mehrere Wälzkörper 9 drehbar angeordnet. Der Innenring 7 und der Außenring 8 sind unter Ausbildung eines Lagerspalts 10 in radialer Richtung bezüglich der Drehachse 5 voneinander beabstandet. Zur Abdichtung des Lagerspalts 10 gegenüber einer Außenumgebung ist dem Radlager 4 eine Radlagerdichtung 11 zugeordnet. Diese liegt in dem hier dargestellten Längsschnitt gesehen in radialer Richtung innenliegend an dem Innenring und in radialer Richtung außenliegend an dem Außenring 8 an, jeweils dichtend. Beispielsweise ist die Radlagerdichtung 11, welche bevorzugt aus einem elastischen Material besteht, mit dem Innenring 7 oder dem Außenring 8 drehfest verbunden und liegt in Umfangsrichtung gleitend an dem jeweils anderen Ring, also entweder dem Au-ßenring 8 oder dem Innenring 7, an.

Zur weiteren Verbesserung der Abdichtung des Radlagers 4 gegenüber der Außenumgebung ist eine Radlagervordichtung 12 vorgesehen. Diese ist benachbart zu dem Radlager 4 angeordnet und drehfest mit der Welle 6 und mithin drehfest mit der Radnabe verbunden. Die Radlagervordichtung 12 weist einen Dichtungsvorsprung 13 auf, der in eine Vordichtungsaufnahme 14 eingreift, welche zwischen dem Außenring 8 und dem Radträger 2 ausgebildet ist. Die Vordichtungsaufnahme 14 wird dabei einerseits von dem Außenring 8 und andererseits von dem Radträger 2 beziehungsweise einer Wand 15 des Radträgers 2 begrenzt.

Die Radlagervordichtung 12 besteht bevorzugt aus einem umgeformten Blech. Sie weist beispielsweise einen ersten Schenkel 16 sowie einen zweiten Schenkel 17 auf. Der erste Schenkel 16 ist einerseits an der Welle 6 befestigt, insbesondere über und/oder mittels eines dritten Schenkels 18. Andererseits geht von dem ersten Schenkel 16 der zweite Schenkel 17 aus, welcher wiederum den Dichtungsvorsprung 13 ausbildet. Der zweite Schenkel 17 und der dritte Schenkel 18 sind bevorzugt jeweils bezüglich des ersten Schenkels 16 angewinkelt.

Der erste Schenkel 16 ist in axialer Richtung beabstandet von dem Radlager 4, insbesondere dem Außenring 8 angeordnet. Der zweite Schenkel 17 erstreckt sich dagegen in Form des Dichtungsvorsprungs 13 in die Vordichtungsaufnahme 14 ein, welche von dem Außenring 8 begrenzt ist. Insoweit liegt der zweite Schenkel 17 zumindest teilweise im Längsschnitt gesehen beziehungsweise in axialer Richtung in Überdeckung mit dem Radlager 4, insbesondere dem Außenring 8, vor. Der Dichtungsvorsprung 13 liegt berührungslos in der Vordichtungsaufnahme 14 vor, also sowohl von dem Radlager 4 als auch dem Radträger 2 beziehungsweise der Wand 15 beabstandet.

Die Radlagervordichtung 12 umgreift die Welle 6 in Umfangsrichtung bezüglich der Drehachse 5 durchgehend. Dabei weist sie zudem bevorzugt einen konstanten Längsschnitt beziehungsweise Querschnitt auf. Die Vordichtungsaufnahme 14 ist dagegen in einem bestimmten Winkelbereich, welcher hier lediglich teilweise zu erkennen ist, zur Ausbildung eines Abtropfkanals 19 unterbrochen. Es kann zudem vorgesehen sein, dass der Außenring 8 des Radlagers 4 zumindest in dem Winkelbereich über eine Abtropffase 20 verfügt, also eine Schrägfläche. Die Abtropffase 20 ist auf der der Radlagervordichtung 12 zugewandten Seite des Außenrings 8 an diesem ausgebildet.

Weiterhin kann es vorgesehen sein, dass an der Radlagervordichtung 12 ein Drehwinkelgeberring 21 befestigt ist. Dieser ist besonders bevorzugt in Umfangsrichtung durchgehend und gleichförmig ausgestaltet. An dem Drehwinkelgeberring 21 kann wenigstens ein Drehwinkelgeberelement angeordnet sein. Bevorzugt liegt der Drehwinkelgeberring 21 auf der dem Radlager 4 abgewandten Seite der Radlagervordichtung 12 vor. Gegenüberliegend zu dem Drehwinkelgeberring 21 ist eine Sensoreinrichtung 22 angeordnet, die zur Erfassung des Drehwinkelgeberelements und somit zur Ermittlung einer Drehwinkelstellung der Radnabe beziehungsweise der Welle 6 dient. Die Sensoreinrichtung 22 kann, wie hier dargestellt, in Umfangsrichtung lediglich bereichsweise vorliegen. Alternativ kann es jedoch vorgesehen sein, dass die Sensoreinrichtung 22 analog zu dem Drehwinkelgeberring 21 in Umfangsrichtung durchgehend ausgestaltet ist. In diesem Fall kann sie zusammen mit dem Drehwinkelgeberring 21 eine zusätzlich Labyrinthdichtung ausbilden.

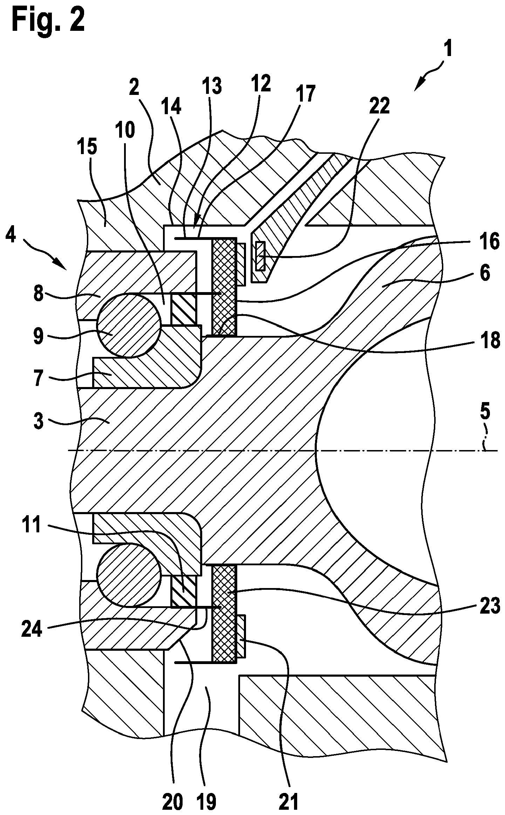

Die Figur 2 zeigt eine schematische Teillängsschnittdarstellung der Radlageranordnung 1 in einer zweiten Ausführungsform. Diese ist grundsätzlich analog zu der ersten Ausführungsform ausgestaltet, sodass auf die vorstehenden Ausführungen hingewiesen wird. Nachfolgend wird lediglich auf die Unterschiede eingegangen. Diese liegen darin, dass an der Radlagervordichtung 12 eine Zusatzdichtung 23 befestigt ist. Bevorzugt erstreckt sich die Zusatzrichtung 23 in radialer Richtung ausgehend von dem zweiten Schenkel 17 bis hin zu dem dritten Schenkel 18. Der dritte Schenkel 18 kann dabei im Vergleich mit der ersten Ausführungsform in axialer Richtung in eine andere Richtung ragen. Entsprechend ragen die Schenkel 17 und 18 ausgehend von dem ersten Schenkel 16 in dieselbe Richtung, nämlich in Richtung des Radlagers 4. Die Zusatzdichtung 23 liegt insoweit zwischen den Schenkeln 16, 17 und 18 vor beziehungsweise an jedem der Schenkel 16, 17 und 18 an.

Die Zusatzdichtung 23 ist auf der dem Radlager 4 zugewandten Seite der Radlagervordichtung 12 angeordnet. Sie steht hierbei mit dem Außenring 8 des Radlagers 4 in Dichtkontakt. Der Dichtkontakt liegt über ein Dichtelement 24 vor, welches an dem Außenring 8 angeordnet beziehungsweise befestigt ist. Beispielsweise ist das Dichtelement 24 zwischen der Radlagerdichtung 11 und dem Außenring 8 klemmend gehalten. Das Dichtelement 24 erstreckt sich in axialer Richtung bis hin in die Zusatzdichtung 23 hinein. Das Dichtelement 24 besteht bevorzugt aus einem härteren Material als die Zusatzdichtung 23 beziehungsweise umgekehrt die Zusatzdichtung 23 aus einem weicheren und/oder elastischeren Material als das Dichtelement 24. Während eines Betriebs der Radlageranordnung 1 wird insoweit von dem Dichtelement 24 ein Arbeitsbereich in der Zusatzdichtung 23 freigeschnitten beziehungsweise freigeschliffen. Eine derartige Ausgestaltung ermöglicht eine Abdichtung des Radlagers 4 mit minimalen Toleranzen, die für jede Radlageranordnung 1 individuell und bestmöglich dichtend ausgestaltet ist.

## Patentansprüche

1. Radlageranordnung (1) für ein Kraftfahrzeug, mit einem Radträger (2) und einer mittels eines Radlagers (4) an dem Radträger (2) drehbar gelagerten Radnabe zur Befestigung eines Rads, mit der eine Welle (6) drehfest gekoppelt ist, wobei eine Radlagerdichtung (11) einerseits an einem auf der Radnabe aufsitzenden Innenring (7) des Radlagers (4) und andererseits an einem an dem Radträger (2) befestigten Außenring (8) des Radlagers (4) dichtend anliegt, wobei die Radlagerdichtung (11) zwischen dem Innenring (7) und dem Außenring (8) aufgenommen ist, **dadurch gekennzeichnet, dass** die Radlageranordnung (1) zusätzlich zu der Radlagerdichtung (11) eine von der Radlagerdichtung (11) beabstandete Radlagervordichtung (12) aufweist, die benachbart zu dem Radlager (4) drehfest an der Welle (6) befestigt ist und mit einem Dichtungsvorsprung (13) in eine zumindest bereichsweise zwischen dem Außenring (8) und dem Radträger (2) ausgebildete Vordichtungsaufnahme (14) eingreift.

2. Radlageranordnung nach Anspruch 1, **dadurch gekennzeichnet, dass** die Radlagervordichtung (12) im Längsschnitt bezüglich einer Drehachse (5) der Radnabe gesehen einen an der Welle (6) angreifenden ersten Schenkel (16) und einen den Dichtungsvorsprung (13) ausbildenden sowie bezüglich des ersten Schenkels (16) angewinkelten zweiten Schenkel (17) aufweist.

3. Radlageranordnung nach einem der vorhergehenden Ansprüche, **dadurch gekennzeichnet, dass** die Radlagervordichtung (12) in Umfangsrichtung bezüglich der Drehachse (5) der Radnabe die Welle (6) durchgehend umgreift.

4. Radlageranordnung nach einem der vorhergehenden Ansprüche, **dadurch gekennzeichnet, dass** die Vordichtungsaufnahme (14) zur Ausbildung eines Abtropfkanals (19) in einem bestimmten Winkelbereich unterbrochen ist.

5. Radlageranordnung nach Anspruch 4, **dadurch gekennzeichnet, dass** der Außenring (8) zumindest in dem Winkelbereich asymmetrisch ausgestaltet ist, insbesondere eine Abtropffase (20) aufweist.

6. Radlageranordnung nach einem der vorhergehenden Ansprüche, **dadurch gekennzeichnet, dass** an der Radlagervordichtung (12) ein in Umfangsrichtung durchgehender Drehwinkelgeberring (21) mit wenigstens einem Drehwinkelgeberelement befestigt ist, insbesondere auf der dem Radlager (4) abgewandten Seite der Radlagervordichtung (12).

7. Radlageranordnung nach Anspruch 6, **dadurch gekennzeichnet, dass** benachbart zu dem Drehwinkelgeberring (21) eine Sensoreinrichtung (22) zur Erfassung des Drehwinkelgeberelements angeordnet ist.

8. Radlageranordnung nach Anspruch 7, **dadurch gekennzeichnet, dass** die Sensoreinrichtung (22) ringförmig ist und zusammen mit dem Drehwinkelgeberring (21) eine Labyrinthdichtung ausbildet.

9. Radlageranordnung nach einem der vorhergehenden Ansprüche, **dadurch gekennzeichnet, dass** an der Radlagervordichtung (12) eine Zusatzdichtung (23) befestigt ist, insbesondere auf der dem Radlager (4) zugewandten Seite der Radlagervordichtung (12), die mit dem Außenring (8) in Dichtkontakt steht.

10. Radlageranordnung nach Anspruch 9, **dadurch gekennzeichnet, dass** der Dichtkontakt mittels eines an dem Außenring (8) angeordneten Dichtelements (24) hergestellt ist, wobei das Dichtelement (24) in axialer Richtung bezüglich der Drehachse (5) in die Zusatzdichtung (23) eingreift.

## Claims

1. Wheel bearing arrangement (1) for a motor vehicle, having a hub carrier (2) and a wheel hub, mounted by means of a wheel bearing (4) on the hub carrier (2) so as to be rotatable, for fastening a wheel, with which a shaft (6) is coupled in a non-rotational manner, wherein a wheel bearing seal (11) rests sealingly on the one hand on an inner ring (7), resting on the wheel hub, of the wheel bearing (4) and on the other hand on an outer ring (8), fastened to the hub carrier (2), of the wheel bearing (4), wherein the wheel bearing seal (11) is accommodated between the inner ring (7) and the outer ring (8), **characterised in that** the wheel bearing arrangement (1) has in addition to the wheel bearing seal (11) a wheel bearing pre-seal (12), spaced from the wheel bearing seal (11), which wheel bearing pre-seal is fastened in a non-rotational manner adjacent to the wheel bearing (4) on the shaft (6) and engages with a sealing protrusion (13) in a pre-seal receptacle (14) formed in at least some regions between the outer ring (8) and the hub carrier (2).

2. Wheel bearing arrangement according to claim 1, **characterised in that** the wheel bearing pre-seal (12) in longitudinal section viewed with respect to an axis of rotation (5) of the wheel hub has a first leg (16) engaging at the shaft (6) and a second leg (17) forming the sealing protrusion (13) and bent with respect to the first leg (16).

3. Wheel bearing arrangement according to any of the preceding claims, **characterised in that** the wheel bearing pre-seal (12) encloses continuously the shaft (6) in circumferential direction with respect to the axis of rotation (5) of the wheel hub.

4. Wheel bearing arrangement according to any of the preceding claims, **characterised in that** the pre-seal receptacle (14) is interrupted in a specified angle range for forming a drainage channel (19).

5. Wheel bearing arrangement according to claim 4, **characterised in that** the outer ring (8) is at least in the angle range asymmetric in design, in particular has a drainage chamfer (20).

6. Wheel bearing arrangement according to any of the preceding claims, **characterised in that** a rotary encoder ring (21), which is continuous in circumferential direction and has at least one rotary encoder element, is fastened on the wheel bearing pre-seal (12), in particular on the side of the wheel bearing pre-seal (12) averted from the wheel bearing (4).

7. Wheel bearing arrangement according to claim 6, **characterised in that** adjacent to the rotary encoder ring (21) is arranged a sensor device (22) for detecting the rotary encoder element.

8. Wheel bearing arrangement according to claim 7, **characterised in that** the sensor device (22) is annular and forms together with the rotary encoder ring (21) a labyrinth seal.

9. Wheel bearing arrangement according to any of the preceding claims, **characterised in that** on the wheel bearing pre-seal (12) is fastened an additional seal (23), in particular on the side of the wheel bearing pre-seal (12) facing the wheel bearing (4), which is in sealing contact with the outer ring (8).

10. Wheel bearing arrangement according to claim 9, **characterised in that** the sealing contact is created by means of a sealing element (24) arranged on the outer ring (8), wherein the sealing element (24) engages in the additional seal (23) in axial direction with respect to the axis of rotation (5).

## Revendications

1. Dispositif de palier de roue (1) pour un véhicule automobile, avec un support de roue (2) et un moyeu de roue monté de manière rotative sur le support de roue (2) au moyen d'un palier de roue (4) pour la fixation d'une roue, avec lequel un arbre (6) est couplé de manière non rotative, dans lequel un joint de palier de roue (11) repose de manière étanche d'une part contre une bague intérieure (7) du palier de roue (4) s'appuyant sur le moyeu de roue et d'autre part contre une bague extérieure (8) du palier de roue (4) fixée sur le support de roue (2), dans lequel le joint de palier de roue (11) est reçu entre la bague intérieure (7) et la bague extérieure (8), **caractérisé en ce que** le dispositif de palier de roue (1) présente, en plus du joint de palier de roue (11), un préjoint de palier de roue (12) espacé du joint de palier de roue (11), qui est fixé sur l'arbre (6) de manière non rotative à côté du palier de roue (4) et s'enclenche avec une saillie de joint (13) dans un logement de préjoint (14) réalisé au moins par zones entre la bague extérieure (8) et le support de roue (2).

2. Dispositif de palier de roue selon la revendication 1, **caractérisé en ce que** le préjoint de palier de roue (12), vu en section longitudinale par rapport à un axe de rotation (5) du moyeu de roue, présente une première branche (16) s'enclenchant sur l'arbre (6) et une seconde branche (17) réalisant la saillie de joint (13) ainsi que coudée par rapport à la première branche (16).

3. Dispositif de palier de roue selon l'une quelconque des revendications précédentes, **caractérisé en ce que** le préjoint de palier de roue (12) entoure l'arbre (6) de manière continue dans la direction circonférentielle par rapport à l'axe de rotation (5) du moyeu de roue.

4. Dispositif de palier de roue selon l'une quelconque des revendications précédentes, **caractérisé en ce que** le logement de préjoint (14) est interrompu dans une certaine plage angulaire pour réaliser un canal d'égouttage (19).

5. Dispositif de palier de roue selon la revendication 4, **caractérisé en ce que** la bague extérieure (8) est configurée asymétriquement au moins dans la plage angulaire, et en particulier présente un chanfrein d'égouttage (20).

6. Dispositif de palier de roue selon l'une quelconque des revendications précédentes, **caractérisé en ce qu'**une bague de capteur d'angle de rotation (21) continue dans la direction circonférentielle avec au moins un élément capteur d'angle de rotation est fixée sur le préjoint de palier de roue (12), en particulier sur le côté du préjoint de palier de roue (12) opposé au palier de roue (4).

7. Dispositif de palier de roue selon la revendication 6, **caractérisé en ce qu'**un dispositif de détection (22) pour détecter l'élément capteur d'angle de rotation est disposé à côté de la bague de capteur d'angle de rotation (21).

8. Dispositif de palier de roue selon la revendication 7, **caractérisé en ce que** le dispositif de détection (22) est annulaire et réalise un joint labyrinthe avec la bague de capteur d'angle de rotation (21).

9. Dispositif de palier de roue selon l'une quelconque des revendications précédentes, **caractérisé en ce qu'**un joint supplémentaire (23) est fixé sur le préjoint de palier de roue (12), en particulier sur le côté du préjoint de palier de roue (12) tourné vers le palier de roue (4), qui est en contact étanche avec la bague extérieure (8).

10. Dispositif de palier de roue selon la revendication 9, **caractérisé en ce que** le contact étanche est fabriqué au moyen d'un élément d'étanchéité (24) disposé sur la bague extérieure (8), dans lequel l'élément d'étanchéité (24) s'enclenche dans le joint supplémentaire (23) en direction axiale par rapport à l'axe de rotation (5).
